# EUROPÄISCHE PATENTSCHRIFT

(11) **EP 0 600 259 B1**
(45) Veröffentlichungstag und Bekanntmachung des Hinweises auf die Patenterteilung: **17.09.1997**
(21) Anmeldenummer: 93118027.7
(22) Anmeldetag: 06.11.1993
(51) Int. Cl.: B29C 51/16

(54) **Tiefziehmaschine**
Deep-drawing machine
Machine d'emboutissage

(30) Priorität: 01.12.1992 DE 9216329 U
(43) Veröffentlichungstag der Anmeldung: 08.06.1994
(73) Patentinhaber: Hassia Verpackungsmaschinen GmbH, D-63689 Ranstadt (DE)
(72) Erfinder: Walter, Kurt, Dipl.-Ing., D-63695 Glauburg (DE)
(74) Vertreter: Wolf, Günter, Dipl.-Ing.

(56) Entgegenhaltungen:
- EP-A- 0 368 185
- CH-A- 576 852
- DE-U- 9 216 329
- FR-A- 2 206 168
- FR-A- 2 479 738

## Beschreibung

Die Erfindung betrifft eine Tiefziehmaschine zum Herstellen von im wesentlichen kastenförmigen, becherartigen Behälter aus thermoplastischer Folie mit Einrichtung zum Einbringen eines banderolenförmigen Streifens in die Tiefziehform gemäß Oberbegriff des Hauptanspruches.

Eine derartige Tiefziehmaschine ist nach der DE-OS-38 37 706 bekannt. Bei dieser Tiefziehmaschine wird das freie Ende des von einer Vorratsrolle mit geeigneten und bekannten Fördermitteln zugeförderten Banderolenstreifens in den Führungsschlitz der Formeintiefung eingeschoben. Die Distanz vom Einschubschlitz bis zur Einmündung des Führungsschlitzes am Führungsstück entspricht dabei der erforderlichen Länge der einzubringenden Banderole, welcher Banderolenstreifen mit denkbar einfachen Schneidelementen auf der Zuförderseite an der Einmündung zum Führungsschlitz abgeschnitten wird. Dabei wird die abgetrennte Länge des Banderolenstreifens nicht mit Förderrollen in den Einschubschlitz bzw. die Formeintiefung eingeschoben, sondern von einem Banderolenabschnittsfördergreifer ergriffen und damit zwangsgeführt eingeschoben. Durch diese Zwangsführung und Zwangsergreifung des abgelängten Banderolenabschnittes und zwar in bezug auf die Einförderung am hinteren Ende des Banderolenabschnittes wird gewährleistet, da sich der Bandgreifer bis zum Einschubschlitz bewegt, daß der gesamte zu belegende Umfang der Eintiefung abgedeckt wird. Ungenauigkeiten, wie sie bei der Einförderung mit Rollen- oder Walzenförderelementen auftreten können, sind damit vorteilhaft vermieden. Diese bekannte Ausbildung einer Tiefziehmaschine arbeitet einwandfrei, verlangt jedoch eine im Querschnitt zumindest angenäherte Kreisform der Formeintiefung, der der Banderolenabschnitt beim Einschieben folgen kann.

Außer solchen im Querschnitt kreisförmigen, becherartigen Behältern, gibt es aber auch kastenförmige, also nicht kreisförmige Behälter (bspw. für Quark, Butter, Butterschmalz, Salatzubereitungen u. dgl.), die in der Regel auch banderoliert werden, bei denen aber die oben beschriebene Art der Banderolung nicht ohne weiteres angewendet werden kann, da sich der eingeschobene Banderolenstreifen an den Ecken, selbst wenn diese etwas abgerundet sind, stößt und außerdem zu erwarten ist, daß sich der eingeschobene Banderolenstreifen zur Kreis- oder Ellipsenform zusammenzieht, d.h., nicht an allen vier Wänden der entsprechend kastenförmigen Formeintiefung angelegt bleibt.

Der Erfindung liegt demgemäß die Aufgabe zugrunde, die Tiefziehmaschine der gattungsgemäßen Art dahingehend umzubilden, daß diese auch zur Herstellung und Banderolierung von im wesentlichen kastenförmigen, becherartigen Behältern genutzt werden kann.

Diese Aufgabe ist mit einer Tiefziehmaschine der eingangs genannten Art nach der Erfindung durch die im Kennzeichen des Anspruches 1 angeführten Merkmale gelöst.

Damit ist zwar eine sogenannte "Rundumbanderolierung" nicht möglich, die aber bei kastenförmigen Behältern in der Regel sowieso nicht praktiziert wird und erforderlich ist. Genutzt wird aber die sich als vorteilhaft erwiesene und exakte Methode der Banderoleneinführung gemäß DE-A-38 37 706, wobei es sich im vorliegenden Fall genau genommen mehr um eine Etikettierung als um eine Banderolierung handelt, da mit der neuartigen Tiefziehmaschine fluchtend zu den beiden sich gegenüberstehenden Flankenwänden entsprechend abgelängte Etikettenabschnitte gleichzeitig eingeschoben werden. Am Einschubvorgang ändert sich dabei praktisch nichts, nur daß, wie gesagt, gleichzeitig zwei Abschnitte eingeführt werden, wobei die beiden Abschnitte nur maximal so lang bemessen sind, wie es der Länge der betreffenden Flankenwände entspricht, d.h., die Länge des Führungsstückes hat im wesentlichen auch nur dieser Länge zu entsprechen. Wenn die Endstellung des eingeschobenen Abschnittes in der Formeintiefung erreicht ist, werden die beiden Banderolenabschnittsgreifer einfach geöffnet, und die beiden Abschnitte rutschen in die Formeintiefung ein, wonach sich bei zurückgestellten Abschnittsgreifern der eigentliche Tiefziehvorgang anschließt.

Um die beiden eingerutschten, aber alleinstehenden Abschnitte genau in der eingenommenen Postition zu halten, ist vorteilhaft in jeder Eintiefungsflanke des Formwerkzeuges mindestens je eine Ansaugöffnung angeordnet, die mit einem entsprechend steuerbaren Vakuumanschluß in Verbindung steht.

Zweckmäßig sind die beiden für die Beschickung einer Formeintiefung notwendigen Abschnittsfördergreifer an einem gemeinsam hin- und herbewegbaren Träger angeordnet. Sofern mehrere Formeintiefungen hintereinander in der Tiefziehmaschine vorhanden sind, was die Regel ist, so können selbstverständlich sämtliche Greiferpaare für alle Formeintiefungen an einem Träger angeordnet werden.

Die erfindungsgemäße Tiefziehmaschine wird nachfolgend anhand der zeichnerischen Darstellung eines Ausführungsbeispieles näher erläutert.

Es zeigt schematisch
- Fig. 1: perspektivisch das Grundprinzip des hier interessierenden Bereiches einer Tiefziehmaschine und
- Fig. 2: ebenfalls den entsprechenden Bereich gemäß Fig. 1 bei Anordnung von mehreren Eintiefungen in der Tiefziehform mit den zugehörigen Zuförderelementen für die Banderolenstreifen.

Die Tiefziehmaschine insgesamt ist nicht dargestellt und bedarf insoweit keiner ins einzelne gehenden Beschreibung, da hinlänglich bekannt. Ebenfalls nicht dargestellt ist das Folienband, aus dem die Becher in den Formeintiefungen 8 der Tiefziehform 12 ausgeformt werden. Das Folienband wird in bekannter Weise mit entsprechenden Förderelementen in Pfeilrichtung B und entsprechender Distanz über die Tiefziehform 12 gefördert, die im Gestell der Tiefziehmaschine in Pfeilrichtung B auf- und abbewegbar angeordnet ist.

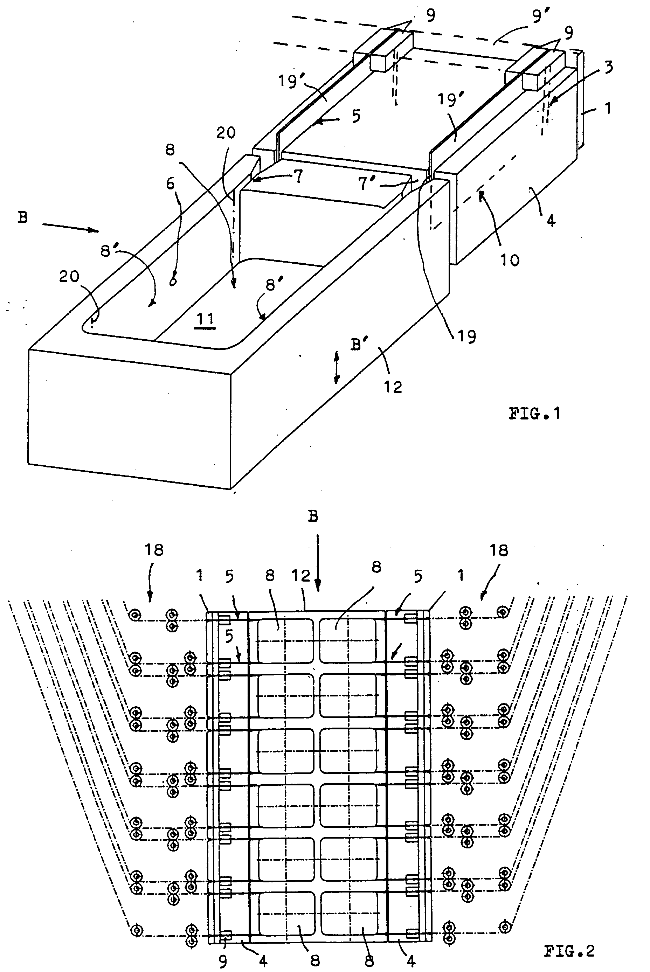

Wie aus Fig. 1 ersichtlich, ist jede Formeintiefung 8 mit zwei Einschubschlitzen 7 versehen, die jeweils das Ende einer seitlichen und tangential von der Eintiefung 8 abgehenden Schlitzführung 7 bilden, die - wie dargestellt - einmündungsseitig trichterartig ausgebildet sein kann. Diese Schlitzführungen 7 fluchten mit sich gerade im Führungsstück 4 erstreckenden Führungsschlitzen 5, denen gemäß Fig. 2 mit geeigneten Fördermitteln 18 die betreffenden Banderolenstreifen 19 zugeführt werden. Die Tiefziehform 12 gemäß Fig. 2 enthält dabei paarweise nebeneinander und in Reihe angeordnet mehrere Formeintiefungen 8, d.h., dieser Tiefziehform 12 wird eine entsprechende Anzahl von Banderolenstreifen 19 zugeführt.

Orientiert an Fig. 1 ist das Schneidelement 1 der Banderolenzufuhreinrichtung 2 an der Einmündung 3 des im Führungsstück 4 angeordneten Förderschlitzes 5 ein längs des Führungsschlitzes 5 bis zum Einschubschlitz 7 der Formeintiefung 8 hin- und herbewegbarer Banderolenabschnittsfördergreifer 9 angeordnet, der nach Einschub des freien Endes eines Banderolenstreifens über die ganze Länge des Führungsstückes 4 bzw. des Führungsschlitzes 5 den überstehenden Rand 19 am zuförderseitigen Ende ergreift, nachdem dieser mittels des Schneidelementes 1 vom zugeförderten Banderolensteifen abgeschnitten worden ist. Die Länge des Banderolenabschnittes entspricht dabei maximal der Länge einer Flankenwand 8'. Der Stellweg des Fördergreifers 9 erstreckt sich dabei nicht nur über die Länge des Führungsstückes 4, sondern bis über das Ende des Führungsschlitzes 7, so daß die Banderolenabschnitte 19 zwischen die strichpunktierten Linien 20 gelangen.

Eine mittige Erfassung des Banderolenabschnittes 20 ist aber auch möglich. Wie ebenfalls auf Fig. 1 ersichtlich, und wie vorerwähnt, sind für eine Formeintiefung 8 jeweils zwei Einschubschlitze 7 mit zugehörigen Schlitzführungen 7', Führungsschlitzen 5 und Abschnittsfördergreifern 9 vorgesehen, und gleiches gilt auch bei der Ausführungsform nach Fig. 2. Das bzw. die Schneidelemente 1 sind entsprechend geschlitzt, so daß bei jedem Takt für jede Formeintiefung 8 zwei zugeförderte Banderolenstreifen 19 geschnitten werden können.

Im übrigen arbeitet die Maschine in gleicher Weise wie die gattungsgemäße Tiefziehmaschine, so daß weitergehende Erläuterungen diesbezüglich entbehrlich sind.

## Patentansprüche

1. Tiefziehmaschine zum Herstellen von im wesentlichen kastenförmigen, becherartigen Behältern aus thermoplastischer Folie mit Einrichtungen zum Einbringen eines banderolenförmigen Streifens in die Tiefziehform, bestehend aus einer in bezug auf die Durchlaufebene des Folienbandes auf- und abbeweglichen Tiefziehform mit mindestens einer Formeintiefung und Einrichtungen zur Banderolenzufuhr, wobei ein Schneidelement (1) der Banderolenzufuhr (2) an der Einmündung (3) des in einem Führungsstück (4) angeordneten Führungsschlitzes (5) und über dem Führungsschlitz (5) ein längs des Führungsschlitzes bis zum Einschubschlitz (7) der Formeintiefung (8) hin- und herbewegbarer Banderolenabschnittsfördergreifer (9) angeordnet ist und wobei ferner der Boden (10) des Führungsschlitzes (5) in bezug auf den Boden (11) der Formeintiefung in Beschickungsstellung höher stehend angeordnet und die Tiefziehform (12) aus ihrer Tiefstellung in Arbeitsstellung bringbar ist,
**dadurch gekennzeichnet,**
daß im Führungsstück (4) zwei Führungsschlitze (5) angeordnet sind, die zu zwei sich fluchtend zu den beiden Eintiefungsflanken (8') der Formeintiefung (8) erstreckenden Einschubschlitzen (7) führen, und daß über jedem Führungs schlitz (5) ein Banderolenabschnittsfördergreifer (9) angeordnet ist.

2. Tiefziehmaschine nach Anspruch 1,
**dadurch gekennzeichnet,**
daß die beiden Banderolenabschnittsfördergreifer (9) gemeinsam an einem hin und her bewegbaren Träger (9') angeordnet sind.

3. Tiefziehmaschine nach Anspruch 1 oder 2,
**dadurch gekennzeichnet,**
daß in den Eintiefungsflanken (8') mindestens je eine Ansaugöffnung (6) angeordnet ist.

## Claims

1. A deep-drawing machine for manufacturing substantially box-shaped, cup-type receptacles from a thermoplastic foil including means for introducing a bill-band-shaped strip into the deep-drawing mould, comprising a deep-drawing mould movable up and down relative to the passage plane of the foil band, with the deep-drawing mould having at least one mould depression and means for the supply of the bill band, with a cuffing element (1) of the bill-band supply (2) being arranged at the opening (3) of the guiding slot (5) provided within a guiding section (4) and a bill-band section conveying gripper (9) reciprocable along the guiding slot down to the insertion slot (7) being provided above the guiding slot (5), and with the bottom (10) of the guiding slot (5) being arranged to stand higher, in the loading position, than the bottom (11) of the mould depression, and the deep-drawing mould (12) being placed from its deep position into its working position, characterised in that disposed within the guiding section (4) are two guiding slots (5) leading to two insertion slots (7) extending in registry with the two depression flanks (8') of the mould depression (8), and that arranged above each guiding slot (5) is a bill-band section conveying gripper (9).

2. A deep-drawing machine according to claim 1,
characterised in that the two bill-band section conveying grippers (9) are jointly arranged on a reciprocable carrier (9').

3. A deep-drawing machine according to claims 1 or 2, characterised in that respectively at least one in-take opening (6) is arranged within the depression flanks (8').

## Revendications

1. Machine à emboutir pour fabriquer des récipients essentiellement en forme de boîte, de type godet, en feuille thermoplastique avec des dispositifs pour mettre en place une bande en forme de banderole dans le moule à emboutir, constituée par un moule à emboutir mobile en montant et en descendant par rapport au plan de passage de la bande de feuille avec au moins un creusement de moule et des dispositifs pour l'amenée de la banderole, un élément de coupe (1) de l'amenée de la banderole (2) étant placé à l'entrée (3) de la fente de guidage (5) placée dans une pièce de guidage (4) et au-dessus de la fente de guidage (5) un grappin transporteur de morceaux détachés de banderoles (9) mobile en va-et-vient le long de la fente de guidage jusqu'à la fente d'insertion (7) et de plus le fond (10) de la fente de guidage (5) étant placé debout plus haut par rapport au fond (11) du creusement de moule en position de chargement et le moule à emboutir (12) pouvant être amené de sa position basse en position de travail,
**caractérisée en ce**
que deux fentes de guidage (5) sont placées dans la pièce de guidage (4), fentes qui mènent à deux fentes d'insertion (7) qui s'étendent de manière alignée par rapport aux deux flancs du creusement (8') du creusement de moule (8) et qu'un grappin transporteur de morceaux détachés de banderole (9) est placé au-dessus de chaque fente de guidage (5).

2. Machine à emboutir selon la revendication 1,
**caractérisée en ce**
que les deux grappins transporteurs de morceaux détachés de banderole (9) sont placés en commun sur un support (9') mobile en va-et-vient.

3. Machine à emboutir selon la revendication 1 ou 2,
**caractérisée en ce**
qu'au moins respectivement une ouverture d'aspiration (6) est placée dans les flancs du creusement (8').
